# EUROPÄISCHE PATENTSCHRIFT

(11) **EP 3 999 406 B1**
(45) Veröffentlichungstag und Bekanntmachung des Hinweises auf die Patenterteilung: **09.04.2025**
(21) Anmeldenummer: 20742202.3
(22) Anmeldetag: 13.07.2020
(51) Int. Cl.: B62H 5/00, B60K 1/04, B62J 43/13, B62M 6/90

(54) **SCHLOSSANORDNUNG**
LOCK ARRANGEMENT
SYSTÈME DE SERRURE

(30) Priorität: 19.07.2019 DE 102019210677
(43) Veröffentlichungstag der Anmeldung: 25.05.2022
(73) Patentinhaber: Robert Bosch GmbH, 70442 Stuttgart (DE)
(72) Erfinder: SCHUMACHER, Christoph, 72144 Dusslingen (DE); MEHLO, Dennis, 72766 Reutlingen (DE); BAYER, Lisa, 70197 Stuttgart (DE); HUMMEL, Frank, 72829 Engstingen (DE); JABS, Volker, 72144 Dusslingen (DE); KOEDER, Thilo, 70839 Gerlingen (DE); ALISIC, Haris, 72770 Reutlingen (DE)
(86) Internationale Anmeldenummer: PCT/EP2020/069689
(87) Internationale Veröffentlichungsnummer: WO 2021/013593

(56) Entgegenhaltungen:
- EP-A1- 2 868 565
- EP-A1- 2 868 565
- EP-A1- 3 491 685
- JP-A- H0 911 759
- US-A- 4 044 852

## Beschreibung

### Stand der Technik

Die vorliegende Erfindung betrifft eine Schlossanordnung zur Sicherung einer Batterie eines mit Muskelkraft und/oder Motorkraft betreibbaren Fahrzeugs, insbesondere eines Elektrofahrrads, sowie ein derartiges mit Muskelkraft und/oder Motorkraft betreibbares Fahrzeug.

Bekannt ist es an Fahrzeugen, beispielsweise Elektrofahrrädern, Schlösser vorzusehen, welche eine Sicherung einer Batterie am Fahrzeug ermöglichen. Derartige Schlösser bewirken dabei einerseits eine Halterung der Batterie am Fahrzeug, um beispielsweise ein Herausfallen der Batterie aus einem Rahmen durch Vibrationen während einer Fahrt zu vermeiden. Zum anderen erlauben solche Schlösser eine Diebstahlsicherung der Batterie, um eine unbefugte Entnahme der Batterie zu verhindern. Zum Entnehmen der Batterie, beispielsweise um diese zu laden, ist üblicherweise ein Entriegeln des Schlosses mittels eines Schlüssels erforderlich. Dokument JPH0911759A zeigt die Präambel des Anspruchs 1.

### Offenbarung der Erfindung

Die erfindungsgemäße Schlossanordnung mit den Merkmalen des Anspruchs 1 bietet den Vorteil einer besonders einfach und komfortabel zu bedienenden Anordnung zur Sicherung einer Batterie eines mit Muskelkraft und/oder Motorkraft betreibbaren Fahrzeugs. Bevorzugt handelt es sich bei dem Fahrzeug um ein Elektrofahrrad. Vorzugsweise kann die Batterie mittels der Schlossanordnung auf oder innerhalb eines Rahmens des Fahrzeugs gesichert werden. Die Schlossanordnung ermöglicht dabei zugleich eine Diebstahlsicherung und eine komfortable Entnahme der Batterie mittels einer einfachen und zuverlässigen Konstruktion. Dies wird erfindungsgemäß erreicht durch eine Schlossanordnung, umfassend einen Schließriegel, einen Schließzylinder und ein Hebeelement. Der Schließriegel ist um eine Riegelachse schwenkbar und dabei in eine Halteposition und in eine Freigabeposition bewegbar. In der Halteposition verhindert der Schließriegel eine Entnahme der Batterie in einer Entnahmerichtung, insbesondere indem der Schließriegel eine Bewegung der Batterie in der Entnahmerichtung blockiert. In der

Freigabeposition erlaubt der Schließriegel eine Entnahme der Batterie in der Entnahmerichtung.

Der Schließzylinder ist eingerichtet, den Schließriegel zu betätigen. Bevorzugt ist der Schließzylinder ausgebildet, den Schließriegel von der Halteposition in die Entnahmeposition zu bewegen. Alternativ oder zusätzlich kann der Schließzylinder ausgebildet sein, den Schließriegel von der Entnahmeposition in die Halteposition zu bewegen. Vorzugsweise ist der Schließzylinder mittels eines Schlüssels betätigbar ausgebildet. Alternativ oder zusätzlich kann der Schließzylinder mittels eines Aktors betätigbar ausgebildet sein. Als Aktor kann beispielsweise ein elektrischer Aktor oder ein elektromagnetischer Aktor vorgesehen sein, welcher besonders bevorzugt mittels eines Funksignals betätigbar ausgebildet ist. Beispielsweise kann ein solcher Aktor mittels einer Fernbedienung und/oder mittels eines Eingabegeräts eines Nutzers des

Fahrzeugs betätigbar ausgebildet sein.

Weiterhin ist das Hebeelement mit dem Schließzylinder gekoppelt und eingerichtet, beim Bewegen des Schließriegels von der Halteposition in die Freigabeposition die Batterie in die Entnahmerichtung zu bewegen. Hierbei bewirkt das Hebeelement vorzugsweise ein Anheben der Batterie in der Entnahmerichtung. Einer Entnahme der Batterie aus oder von dem Fahrzeug, beispielsweise aus einer Halterung innerhalb eines Fahrzeugrahmens, wird hierdurch erleichtert.

Das Hebeelement ist erfindungsgemäß direkt oder indirekt mittels des Schließzylinders betätigbar ausgebildet. Beispielsweise kann das Hebeelement für eine direkte Betätigung unmittelbar mit dem Schließzylinder in Eingriff stehen. Alternativ kann das Hebeelement mit dem Schließriegel in Eingriff stehen und somit indirekt mittels des Schließzylinders betätigbar sein.

Das heißt, durch eine Betätigung des Schließzylinders, beispielsweise durch eine Schlüsselbetätigung oder mittels eines Aktors, kann die Batterie mittels des Hebeelements in der Entnahmerichtung bewegt werden, sodass die Batterie für eine Bedienperson leicht zugänglich und einfach zu entnehmen ist. Insbesondere im Falle von innerhalb eines Fahrzeugrahmens angeordneten Batterien, welche in dem Rahmen gut geschützt und optisch versteckt, aber meist schwer zugänglich angeordnet sind, wird durch die Schlossanordnung eine Entnahme der Batterien deutlich erleichtert. Die spezielle Konstruktion bietet somit insbesondere einen mechanischen Hebemechanismus zum Anheben der Batterie, welcher durch die Bedienperson über den Schließzylinder betätigt werden kann. Hierdurch ist beispielsweise auch bei Verschmutzung einer Halterung der Batterie ein einfaches und komfortables Entnehmen der Batterie möglich.

Die Unteransprüche zeigen bevorzugte Weiterbildungen der Erfindung.

Bevorzugt ist das Hebeelement an dem Schließriegel angeordnet. Beispielsweise kann das Hebeelement ein zapfen- oder hebelartiger Fortsatz am Schießriegel sein, welcher bei einer Bewegung des Schließriegels in die Entnahmeposition gegen die Batterie angelegt ist und die Batterie dabei anhebt. Vorzugsweise kann der Schließriegel hierbei als zweiseitiger Hebel ausgebildet sein, wobei ein freies Ende des zweiseitigen Hebels das Hebeelement bildet und ein anderes freies Ende des Hebels eine Bewegung der Batterie in Entnahmerichtung blockieren kann. Besonders günstig ist es dabei, wenn die Riegelachse in Entnahmerichtung zwischen den beiden freien Enden des zweiseitigen Hebels angeordnet ist. Somit wird eine besonders einfache und kostengünstige Konstruktion der Schlossanordnung ermöglicht, welche durch einen einfachen Mechanismus jederzeit, beispielsweise auch bei starker Verschmutzung, eine zuverlässige Funktion erlaubt.

Besonders bevorzugt ist das Hebeelement um eine Hebeachse schwenkbar angeordnet, wobei die Hebeachse vorzugsweise parallel zur Riegelachse angeordnet ist. Insbesondere ist es hierbei günstig, wenn das Hebeelement als separates Bauteil zum Schließriegel vorgesehen ist. Beispielsweise kann das Hebeelement als zweiseitiger Hebel ausgebildet sein, wobei ein freies Ende des Hebels gegen die Batterie anlegbar ist und ein anderes freies Ende direkt oder indirekt mittels des Schließzylinders betätigbar ausgebildet ist, und wobei die Hebeachse zwischen jeweiligen Angriffspunkten der beiden freien Enden des Hebeelements angeordnet ist. Somit kann beispielswiese je nach Anordnung der Hebeachse ein Hebelarm, über welchen eine Kraft auf die Batterie aufgebracht wird, zum Bewegen der Batterie, angepasst werden, und dadurch eine Unterstützung der Entnahme durch Betätigung des Schließzylinders weiter optimiert werden.

Vorteilhafterweise ist das Hebeelement mittels einer Betätigung durch den Schließriegel um die Hebeachse schwenkbar. Insbesondere kann hierbei der Schließriegel beim Drehen um die Riegelachse gegen das Hebeelement in Anlage gebracht werden, wodurch das Hebeelement um die Hebeachse schwenkt und dadurch gegen die Batterie drückt, um die Bewegung der Batterie in der Entnahmerichtung zu bewirken. Beispielsweise ist es hierbei auch möglich, das Hebeelement derart anzuordnen, dass der Schließriegel sich um einen vorbestimmte Winkel beim Bewegen von der Halteposition zur Freigabeposition frei drehen kann, bevor der Schließriegel das Hebeelement betätigt. Dadurch kann beispielsweise ein gegenseitiges Versperren oder Verklemmen von Hebeelement und Schließriegel beim Aufsperren der Schlossanordnung zuverlässig vermieden werden.

Weiterhin ist es vorteilhaft, wenn der Schließriegel ein Sicherungselement aufweist, welches formschlüssig in die Batterie eingreift, wenn sich der Schließriegel in der Halteposition befindet. Beispielsweise kann das Sicherungselement hakenförmig ausgebildet sein. Alternativ kann das Sicherungselement beispielsweise eine gerade Eingriffskante aufweisen, welche insbesondere senkrecht zur Entnahmerichtung angeordnet ist. Vorzugsweise ist das Sicherungselement eingerichtet in eine Aussparung oder einen Vorsprung der Batterie einzugreifen. Alternativ kann das Sicherungselement formschlüssig mit einer Außenkante der Batterie eingreifen und damit eine Bewegung der Batterie in der Entnahmerichtung verhindern.

Bevorzugterweise weist das Sicherungselement eine Einlegeschräge auf. Die Einlegeschräge ist eingerichtet, bei einem Einlegen der Batterie, insbesondere in zur Entnahmerichtung entgegengesetzter Richtung, den Schließriegel in die Freigabeposition zu bewegen. Vorzugsweise definiert die Einlegeschräge hierbei eine in Entnahmerichtung liegende vorderste Kante des Schließriegels, mit welcher die Batterie beim Einlegen zuerst in Kontakt kommt. Bevorzugt ist die Einlegeschräge hierbei in einem Winkel kleiner als 90° gegenüber der Entnahmerichtung angeordnet. Das heißt, beim Einlegen der Batterie bewirkt die Einlegeschräge, dass der Schließriegel um die Riegelachse automatisch seitlich in die Freigabeposition weggedrückt wird, um das Einlegen der Batterie zu ermöglichen. Somit ist eine einfache und komfortable Bedienung der Schlossanordnung möglich, wobei eine Betätigung des Schließzylinders zum Einlegen nicht erforderlich ist, sondern nur zur Entnahme der Batterie. Bevorzugt umfasst die Schlossanordnung ferner eine Rückstellfeder, welche eingerichtet ist, den Schließriegel mittels einer Rückstell-Federkraft in die Halteposition zurückzustellen. Die Rückstell-Federkraft wirkt dabei vorzugsweise in Richtung von der Freigabeposition zur Halteposition. Das heißt, in einem unbetätigten Zustand des Schließriegels bewirkt die Rückstellfeder mittels der Rückstell-Federkraft, dass der Schließriegel in der Halteposition gehalten wird. Dadurch wird einerseits ein unbeabsichtigtes Lösen oder Herausfallen der Batterie verhindert und zudem eine einfache Diebstahlsicherung bewirkt.

Weiter bevorzugt weist der Schließzylinder einen, insbesondere zylindrischen Schließkörper auf, welcher um eine Schließachse drehbar ist. Die Schließachse ist vorzugsweise senkrecht zur Entnahmerichtung, und besonders bevorzugt parallel zur Riegelachse. Vorzugsweise ist in den Schließkörper ein Schlüssel einführbar, mittels welchem eine Drehung des Schließkörpers um die Schließachse ermöglicht wird. Alternativ oder zusätzlich kann der Schließzylinder einen Aktor, beispielsweise einen Servomotor oder einen elektromagnetischen Aktor, aufweisen, welcher eingerichtet ist, den Schließzylinder in Rotation zu versetzen.

Besonders bevorzugt weist der Schließzylinder einen Schließpin auf, welcher sich parallel zur Längsachse erstreckt, und welcher exzentrisch am Schließkörper angeordnet ist. Der Schließpin ist dabei eingerichtet, in den Schließriegel einzugreifen. Vorzugsweise greift der Schließpin hierbei in eine Aussparung des Schließriegels ein. Durch die exzentrische Anordnung des Schließpins am Schließkörper bewegt sich der Schließpin auf einer Kreisbahn, wenn der Schließkörper um die Schließachse gedreht wird. Hierbei führt der Schließpin insbesondere auch eine Bewegungskomponente senkrecht zur Entnahmerichtung aus, wodurch der Schließregel entsprechend um die Riegelachse geschwenkt wird. Somit ergibt sich eine einfache und zuverlässige Möglichkeit einer Betätigung des Schließriegels durch den Schließzylinder.

Vorzugsweise ist der Schließzylinder in eine Verriegelungsposition und in eine Entnahmeposition drehbar. In der Entnahmeposition ist der Schließpin des Schließzylinders derart mit dem Schließriegel in Eingriff, dass der Schließriegel in der Freigabeposition gehalten wird. In der Verriegelungsposition ist der Schließpin derart angeordnet und mit dem Schließriegel in Eingriff, dass der Schließpin den Schließriegel in der Halteposition hält. Insbesondere verhindert der Schließpin im letzteren Fall, dass sich der Schließriegel in die Freigabeposition bewegen kann, beispielsweise durch unerwünschte Krafteinwirkung auf den Schließriegel. In der Verriegelungsposition bewirkt der Schließzylinder somit insbesondere eine Zwangsverriegelung, welche bevorzugt ausschließlich durch eine Schlüsselbetätigung und/oder eine Betätigung eines Aktors lösbar ist. Hierdurch ist die Schlossanordnung in eine besonders diebstahlsichere Konfiguration bringbar. Zudem kann durch Drehen des Schließzylinders in die Entnahmeposition auf einfache Art und Weise der Schließriegel zurückgezogen werden, um die Batterie zur Entnahme freizugeben, wobei das Hebeelement hierbei wie oben beschrieben ein Anheben der Batterie Entnahmerichtung bewirkt für eine einfache Entnahme.

Besonders bevorzugt ist der Schließzylinder zusätzlich in eine Einlegeposition drehbar, in welcher der Schließpin eine Bewegung des Schließriegels von der Halteposition in die Freigabeposition und in umgekehrter Richtung erlaubt. Vorzugsweise ist hierfür eine Aussparung des Schließriegels, in welche der Schließpin eingreift, derart ausgestaltet, dass der Schließriegel eine Relativbewegung zum Schließpin ausführen kann, nämlich ein Schwenken von der Halteposition in die Freigabeposition. Vorzugsweise ist bezüglich einer Rotation um die Schließachse die Verriegelungsposition zwischen der Einlegeposition und der Entnahmeposition angeordnet. Die Einlegeposition ermöglicht somit ein einfaches und komfortables Einlegen der Batterie ohne dass eine Betätigung des Schließzylinders erforderlich ist.

Vorteilhafterweise umfasst die Schlossanordnung ferner eine Verriegelungsfeder, welche eingerichtet ist den Schließzylinder mittels einer Verriegelungs-Federkraft in die Verriegelungsposition zu drehen. Das heißt, die Verriegelungsfeder bewirkt insbesondere, dass der Schließzylinder im unbetätigten Zustand mittels der Verriegelungs-Federkraft von der Einlegeposition in die Verriegelungsposition gedreht wird. Die Verriegelungsfeder kann insbesondere als Rückstellfeder ausgebildet sein. Sofern der Schließzylinder nicht betätigt wird liegt somit insbesondere eine Zwangsverriegelung vor, um eine besonders diebstahlsichere Sicherung der Batterie zu erhalten.

Weiter bevorzugt weist der Schließriegel eine Rastvorrichtung auf, welche ein Einrasten des Schließzylinders in der Einlegeposition erlaubt. Vorzugsweise kann hierfür der Schließpin des Schließzylinders an Rastelementen des Schließzylinders einrasten. Eine Rastkraft der Rastvorrichtung wirkt dabei insbesondere entgegengesetzt zur Verriegelungs-Federkraft. Bevorzugt ist die Rastkraft größer oder gleich der Verriegelungs-Federkraft. Bevorzugt sind die Rastkraft und die Verriegelungs-Federkraft dabei so aufeinander abgestimmt, dass durch ein ruckartiges Zurückschnappen des Schließriegels, beispielsweise durch Zurückstellen mittels der Rückstellfeder nachdem die Batterie vollständig eingelegt ist, die Rastkraft überwunden wird, sodass der Schließzylinder durch die Verriegelungsfeder in die Verriegelungsposition gedreht wird. Dadurch kann insbesondere eine automatische Zwangsverriegelung nach dem Einlegen der Batterie erfolgen.

Vorzugsweise umfasst die Schlossanordnung ferner eine Entnahmefeder. Die Entnahmefeder ist eingerichtet, eine Entnahme-Federkraft in der Entnahmerichtung auf die Batterie aufzubringen. Dadurch wird das schlüsselbetätigte Anheben der Batterie mittels des Federelements zusätzlich durch die Entnahme-Federkraft unterstützt, wodurch ein noch leichteres Entnehmen der Batterie möglich ist.

Ferner betrifft die Erfindung ein mit Muskelkraft und/oder Motorkraft betreibbares Fahrzeug mit einer Batterie und mit einer obenstehend beschriebenen Schlossanordnung. Die Schlossanordnung ist vorzugsweise eingerichtet, die Batterie am Fahrzeug, insbesondere innerhalb eines Fahrzeugrahmes, zu sichern sowie eine schlüsselbetätigte und/oder aktorbetätigte Freigabe zur Entnahme der Batterie zu ermöglichen.

### Kurze Beschreibung der Zeichnungen

Nachfolgend werden Ausführungsbeispiele der Erfindung unter Bezugnahme auf die begleitende Zeichnung im Detail beschrieben. Gleiche bzw. funktional gleiche Bauteile sind stets mit denselben Bezugszeichen versehen. In der Zeichnung ist:
- Figur 1: eine vereinfachte schematische Darstellung eines Elektrofahrrads mit einer Schlossanordnung gemäß einem ersten Ausführungsbeispiel der Erfindung,
- Figur 2: die Schlossanordnung des ersten Ausführungsbeispiels der Figur 1 im Detail und in geschlossenem Zustand,
- Figur 3: die Schlossanordnung der Figur 2 in geöffnetem Zustand,
- Figur 4: eine Schlossanordnung der Figur 2 in einem Einlegezustand,
- Figur 5: eine weitere Ansicht der Schlossanordnung der Figur 2,
- Figur 6: eine Schlossanordnung gemäß einem zweiten Ausführungsbeispiel der Erfindung, und
- Figur 7: eine Schlossanordnung gemäß einem dritten Ausführungsbeispiel der Erfindung.

### Ausführungsformen der Erfindung

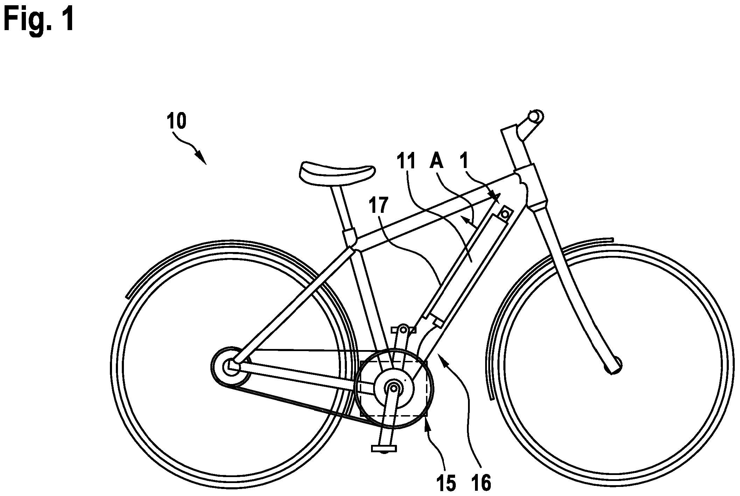

Die Figur 1 zeigt ein mit Muskelkraft und oder Motorkraft betreibbares Fahrzeug. Bei dem Fahrzeug handelt es sich um ein Elektrofahrrad 10 mit einem Elektromotor 15, zur Unterstützung einer Tretkraft eines Fahrers. Der Elektromotor 15 wird von einer Batterie 11 mit elektrischer Energie versorgt.

Die Batterie 11 ist innerhalb eines Fahrzeugrahmens 16 angeordnet. Zugänglich ist die Batterie 11 über einer entfernbaren Deckel 17 des Fahrzeugrahmens 16. Zur Sicherung der Batterie 11 innerhalb des Fahrzeugrahmens 16 umfasst das Elektrofahrrad 10 eine Schlossanordnung 1. Die Schlossanordnung 1 ermöglicht dabei eine Sicherung der Batterie 11 am Elektrofahrrad 10 zur Halterung und Diebstahlsicherung. Zudem bietet die Schlossanordnung 1 eine einfache und komfortable Möglichkeit der Entnahme der Batterie 11 in Entnahmerichtung A, um die Batterie 11 nach der Entnahme beispielsweise laden zu können.

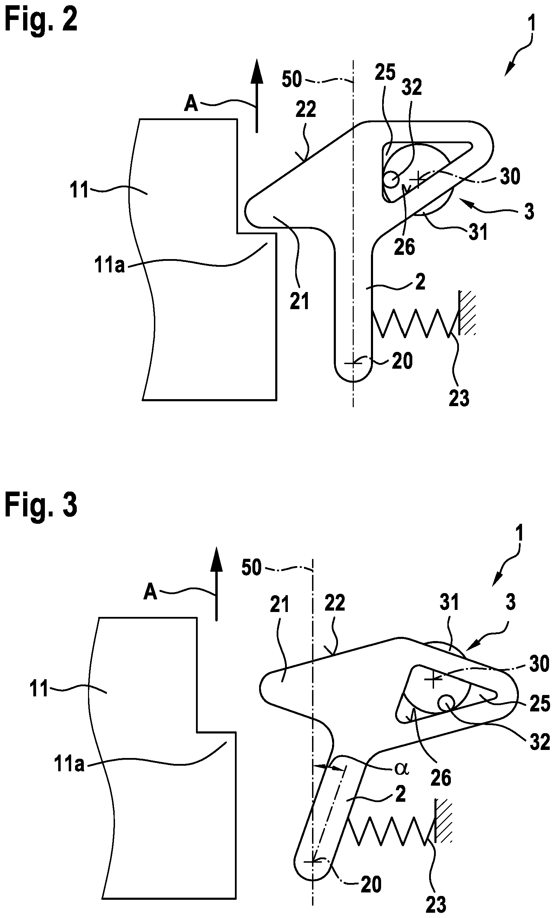

Aufbau und Funktionsweise bevorzugter Ausführungsbeispiele der Schlossanordnung 1 werden nachfolgend in Bezug auf die Figuren 2 bis 7 beschrieben.

Die Figuren 2 bis 5 zeigen eine Schlossanordnung 1 gemäß einem ersten Ausführungsbeispiel der Erfindung. Dargestellt ist dabei in Figur 2 die Schlossanordnung 1 und ein Ausschnitt der Batterie 11, welche durch die Schlossanordnung 1 gesichert wird. Die Schlossanordnung 1 umfasst hierfür einen Schließriegel 2, welcher eine Bewegung der Batterie 11 in Entnahmerichtung A verhindert oder freigibt.

Zum Verhindern einer Entnahme, also zum Halten der Batterie 11 am Elektrofahrrad 10, weist der Schließriegel 2 ein Sicherungselement 21 auf, welches eingerichtet ist, in einen Absatz 11a der Batterie 11 formschlüssig einzugreifen. In dieser in der Figur 2 dargestellten Halteposition erstreckt sich der Schließriegel 2 im Wesentlichen entlang einer Entnahmeachse 50, welche parallel zur Entnahmerichtung A ist.

Um die Batterie 11 freizugeben, also um eine Entnahme der Batterie 11 in Entnahmerichtung A zu erlauben, kann der Schließriegel 2 um eine Riegelachse 20 von der Halteposition in eine Freigabeposition, welche in der Figur 3 dargestellt ist, geschwenkt werden. In der Freigabeposition greift das Sicherungselement 21 nicht in den Absatz 11a der Batterie 11 ein, wodurch eine Bewegung der Batterie 11 in Entnahmerichtung A freigegeben und somit eine Entnahme möglich ist. In der Freigabeposition ist der Schließriegel 2 um einen Winkel α gegenüber der Halteposition verschwenkt, insbesondere von der Batterie 11 weg geschwenkt.

Zur Betätigung des Schließriegels 2 umfasst die Schlossanordnung 1 einen Schließzylinder 3, welcher mittels eines Schlüssels betätigbar ausgebildet ist. Der Schließzylinder 3 umfasst einen zylindrischen Schließkörper 31, welcher um eine zur Riegelachse 20 parallele Schließachse 30 drehbar ist. Weiterhin weist der Schließzylinder 3 einen Schließpin 32 auf, welcher sich von dem Schließkörper 31 ausgehend in Richtung der Schließachse 30 erstreckt. Der Schließpin 32 ist dabei exzentrisch am Schließkörper 31 angeordnet und wird somit beim Drehen des Schließkörpers 31 um die Schließachse 30 auf einer Kreisbahn bewegt. Der Schließpin 32 greift in eine dreiecksförmige Aussparung 25 des Schließriegels 2 ein, wodurch der Schließzylinder 3 den Schließriegel 2 entsprechend um die Riegelachse 20 schwenken kann, wie nachfolgend genauer beschrieben.

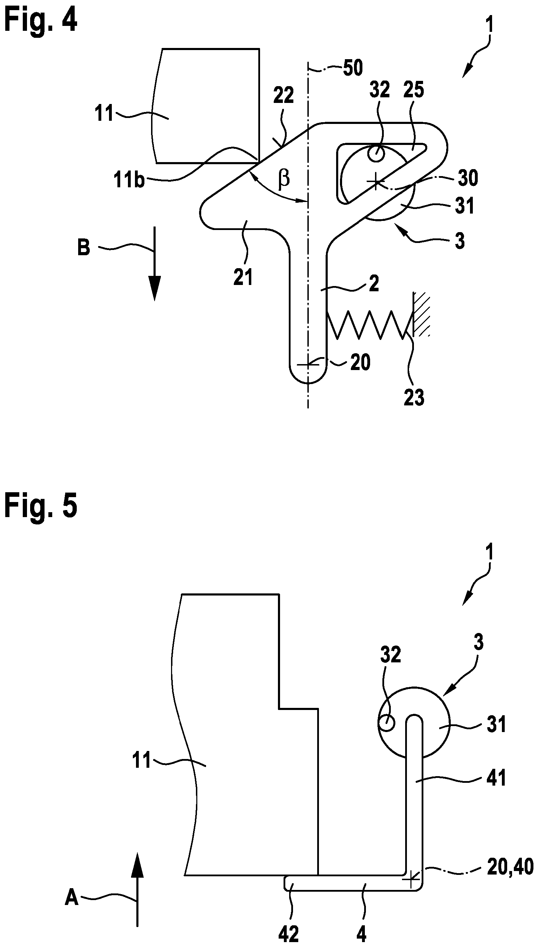

Der Schließzylinder 3 ist in drei verschiedene Positionen drehbar, nämlich in eine Verriegelungsposition (Figur 2), eine Entnahmeposition (Figur 3) und eine Einlegeposition (Figur 4).

In der Verriegelungsposition ist der Schließpin 32 des Schließzylinders 3, wie in der Figur 2 abgebildet, so angeordnet, dass dieser den Schließriegel 2 in der Halteposition hält. Ein Schwenken des Schließriegels 2 von der Halteposition in die Freigabeposition wird hierbei durch den Schließpin 32 blockiert. Dieser Zustand stellt eine Zwangsverriegelung dar, in welcher eine Entnahme der Batterie 11 einfach und sicher verhindert wird. Durch den Schließpin 32 wird dabei verhindert, dass der Schließriegel 2 unbeabsichtigt, beispielsweise durch Erschütterungen, oder andere äußere Krafteinwirkung auf den Schließriegel 2 in die Freigabeposition bewegt wird.

Zur Entnahme der Batterie 11 kann der Schließzylinder 3 in die in der Figur 3 abgebildete Entnahmeposition gedreht werden. Gemäß der Ansicht der Figur 3 entspricht dies einem Drehen entgegen des Uhrzeigersinns. Beim Drehen drückt der Schließpin 32 hierbei gegen eine Schräge 26 des Schließriegels 2, wodurch der Schließriegel 2 in die Freigabeposition geschwenkt wird. In diesem Zustand ist eine Entnahme der Batterie 11 in der Entnahmerichtung A möglich.

Sobald der Schließzylinder 3 nicht mehr in die Entnahmeposition gedreht ist, wird der Schließriegel 2 automatisch in die Halteposition zurückgestellt. Hierfür umfasst die Schlossanordnung 1 eine Rückstellfeder 23, welche eine Rückstell-Federkraft auf den Schließriegel 2 aufbringt, um diesen in die Halteposition zurückzustellen.

Darüber hinaus ist der Schließzylinder 3 in eine Einlegeposition drehbar, welche in der Figur 4 abgebildet ist. Hierzu wird der Schließzylinder von der Verriegelungsposition (vgl. Figur 2) im Uhrzeigersinn um 90° um die Schließachse 30 gedreht. In dieser Stellung ist ein Schwenken des Schließriegels 2 von der abgebildeten Halteposition in die Freigabeposition (vgl. Figur 3) freigegeben, da der Schließriegel 2 aufgrund der Dreiecksform der Aussparung 25 nicht durch den Schließpin 32 blockiert ist.

Die Einlegeposition erlaubt ein einfaches und komfortables Einlegen der Batterie 11 in Einlegerichtung B, welche entgegengesetzt zur Entnahmerichtung A ist, ohne dass eine Betätigung des Schließzylinders 3 erforderlich ist. Dies ist möglich, da das Sicherungselement 21 eine Einlegeschräge 22 aufweist, welche bei einem Einlegen der Batterie 11 ein automatisches Schwenken des Schließriegels 2 von der Halteposition in die Freigabeposition bewirkt. Hierfür ist die Einlegeschräge 22 in einem Winkel β gegenüber der Einlegeachse 50 angeordnet, wenn sich der Schließriegel 2 in der Halteposition befindet. Wird die Batterie 11 wie in der Figur 4 gezeigt in Einlegerichtung B eingelegt, so drückt eine Kante 11b der Batterie 11 gegen die Einlegeschräge 22 und drückt somit den Schließriegel 2 von der Halteposition in die Freigabeposition. Durch die Rückstellfeder 23 wird der Schließriegel 2 nach dem vollständigen Einlegen der Batterie 11 wieder in die Halteposition zurückgestellt, sodass die Batterie 11 durch den formschlüssigen Eingriff mit dem Sicherungselement 21 gehalten wird.

Darüber hinaus umfasst die Schlossanordnung 1 ein Hebeelement 4, welches in der Figur 5 dargestellt ist. Die Figur 5 zeigt dabei eine Ansicht der Schlossanordnung 1 des ersten Ausführungsbeispiels der Figuren 2 bis 4 in einer alternativen Ansicht. Im Detail zeigt die Figur 5 eine Ansicht der Schlossanordnung 1 der Figur 2 in einer anderen Ebene entlang der Riegelachse 20.

Das Hebeelement 4 ist um eine Hebeachse 40 schwenkbar, wobei im ersten Ausführungsbeispiel die Hebeachse 40 identisch mit der Riegelachse 20 ist. Das Hebeelement 4 ist dabei als zweiseitiger Hebel ausgebildet. Ein erstes freies Ende 41 ist mittels des Schließpins 32 des Schließzylinders 3 betätigbar. Das Hebeelement 4 ist somit direkt mittels des Schließzylinders 3 betätigbar Bei einer Drehung des Schließzylinders 3 von der Verriegelungsposition, welche in der Figur 5 dargestellt ist, in die Entnahmeposition (vgl. Figur 3), drückt der Schließpin 32 gegen das erste freie Ende 41 des Hebeelements 4, sodass das Hebeelement im Uhrzeigersinn um die Hebeachse 40 geschwenkt wird. Dadurch drückt ein zweites freies Ende 42 des Hebeelements 4 in Entnahmerichtung A gegen die Batterie 11, wodurch diese in der Entnahmerichtung A bewegt, also angehoben wird.

Somit wird bei einer Drehung des Schließzylinders 3 in die Entnahmeposition nicht nur der Schließriegel 2 zur Freigabe der Batterie 11 zurückgezogen, sondern zusätzlich die Batterie 11 durch das Hebeelement 4 in die Entnahmerichtung A angehoben. Dadurch kann ein Nutzer des Elektrofahrrads 10 mittels einer Schlüsselbetätigung die Batterie 11 sehr einfach und komfortabel freigeben und anheben, wodurch eine einfache Entnahme der Batterie 11 möglich ist.

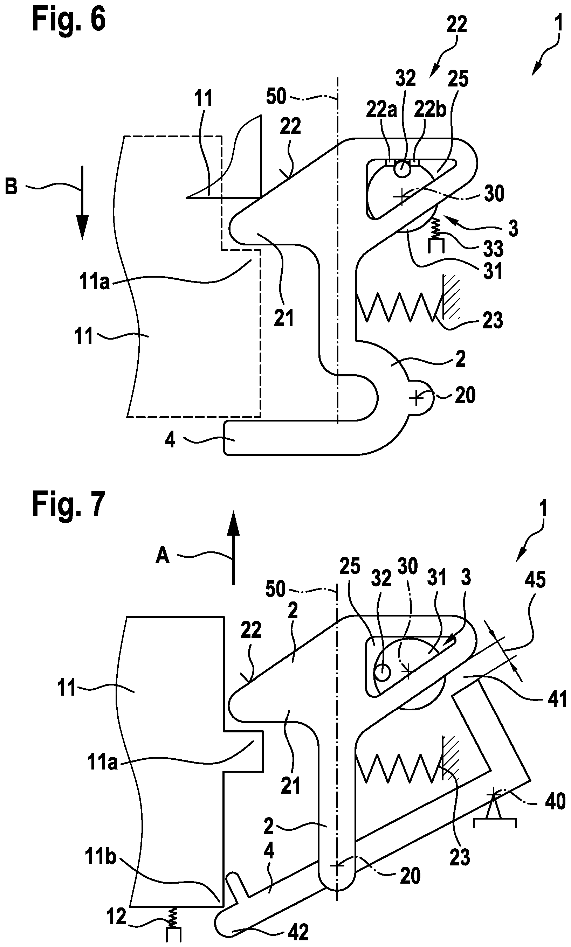

Die Figur 6 zeigt eine Schlossanordnung 1 gemäß einem zweiten Ausführungsbeispiel der Erfindung. Das zweite Ausführungsbeispiel entspricht im Wesentlichen dem ersten Ausführungsbeispiel mit einer alternativen Gestaltung des Hebeelements 4. Außerdem sind zusätzlich eine Rastvorrichtung 22 sowie ein Rückstellmechanismus des Schließzylinders 3 vorgesehen. Die Figur 6 zeigt einen Zustand während des Einlegens der Batterie 11, analog der Figur 4. Zur Verdeutlichung der Funktion des Hebeelements 4 bei eingelegter Batterie 11 ist diese zusätzlich im eingelegten Zustand gestrichelt dargestellt.

Im zweiten Ausführungsbeispiel der Figur 6 ist das Hebeelement 4 an dem Schließriegel 2 angeordnet. Das Hebeelement 4 ist dabei einstückig mit dem Schließriegel 2 ausgebildet. Folglich liegen Hebeelement 4 und Schließriegel 2 in derselben Ebene entlang der Riegelachse 20. Die Riegelachse 20 ist dabei über der Entnahmeachse 50 nach rechts, also von der Batterie 11 weg versetzt, angeordnet.

Der Schließriegel 2 ist somit im zweiten Ausführungsbeispiel als zweiseitiger Hebel ausgebildet, welcher an dessen freien Enden, nämlich dem Sicherungselement 21 und dem Hebeelement 4, jeweils mit der Batterie 11 in Eingriff gebracht werden kann. Die Riegelachse 20 ist dabei in Bezug auf die Entnahmerichtung A zwischen Sicherungselement 21 und Hebeelement 4 angeordnet.

Analog zum ersten Ausführungsbeispiel erfolgt auch im zweiten Ausführungsbeispiel bei einer Drehung des Schließzylinders 3 in die Entnahmeposition ein Schwenken des Schließriegels 2 in die Freigabeposition, wodurch die Batterie 11 entnommen werden kann. Mittels des am Schließriegel 2 angeordneten Hebeelements 4 erfolgt dabei ebenfalls ein Anheben der Batterie 11 in die Entnahmerichtung A. Im zweiten Ausführungsbeispiel ist das Hebeelement 4 somit über den Schließriegel 2, und damit mittels des Schließzylinders 3 indirekt, betätigbar.

Ferner umfasst die Schlossanordnung 1 des zweiten Ausführungsbeispiels der Figur 6 ferner eine Verriegelungsfeder 33. Die Verriegelungsfeder 33 ist am Schließzylinder 3 angeordnet und übt eine Verriegelungs-Federkraft auf den Schließzylinder 3 aus, sodass dieser von der Einlegeposition in die Verriegelungsposition zurückgestellt wird. Um ein komfortables Einlegen der Batterie zu ermöglichen, umfasst die Schlossanordnung 1 des zweiten Ausführungsbeispiels ferner eine Rastvorrichtung 22, mittels welcher der Schließzylinder 3 in der Einlegeposition einrasten kann.

Die Rastvorrichtung 22 umfasst ein erstes Rastelement 22a und ein zweites Rastelement 22b. Beide Rastelemente 22a, 22b sind am Schließriegel 2 vorgesehen und ragen jeweils in die Ausnehmung 25 hinein. Die beiden Rastelemente 22a, 22b sind dabei am in Entnahmerichtung A betrachteten oberen Rand der Ausnehmung 25 angeordnet, sodass der Schließpin 32 des Schließzylinders 3 zwischen den beiden Rastelementen 22a, 22b einrasten kann, wenn sich der Schließzylinder 3 in der Einlegeposition befindet. Hierbei übt das erste Rastelement 22a eine Rastkraft auf den Schließpin 32 auf, welche der Verriegelung-Federkraft entgegengesetzt ist und geringfügig größer ist als diese. Somit wird der Schließzylinder 3 durch die Rastvorrichtung 22 in der in der Figur 6 abgebildeten Einlegeposition gehalten.

Bei einem Einlegen der Batterie 11 in Einlegerichtung B, wird der Schließriegel 2 langsam im Uhrzeigersinn um die Riegelachse 20 in die Einlegeposition geschwenkt. Dabei wird aufgrund der Rastvorrichtung 22 der Schließzylinder 3 ebenfalls im Uhrzeigersinn mitgedreht. Sobald die Batterie 11 die gestrichelt gekennzeichnete Position einnimmt, rutscht das Sicherungselement 21 über den Vorsprung 11a. Der Schließriegel 2 schnappt dabei aufgrund der Rückstellfeder 23 ruckartig in die Halteposition zurück. Aufgrund dieses ruckartigen Zurückschnappens überwindet der Schließpin 32 die Rastkraft der Rastvorrichtung 22, wodurch der Schließzylinder 3 durch die Verriegelungsfeder 33 automatisch in die Verriegelungsposition zurückgestellt wird.

Ein Benutzer erhält somit mit der Schlossanordnung 1 gemäß dem zweiten Ausführungsbeispiel eine Vorrichtung, welche bei besonders einfacher und komfortabler Bedienung eine sehr sichere Befestigung der Batterie 11 am Elektrofahrrad 10 ermöglicht. Hierfür kann der Benutzer beispielsweise zur Entnahme der Batterie 11 den Schließzylinder 3 in die Entnahmeposition drehen (analog der Figur 3) und anschließend nach der Entnahme der Batterie 11 in die Einlegeposition (vgl. Figur 6) drehen. Das Einrasten des Schließzylinders 3 in der Einlegeposition erlaubt damit ein Wiedereinlegen der Batterie 11 ohne Schlüsselbetätigung. Durch das beschriebene automatische Zurückstellen des Schließzylinders 3 in die Verriegelungsposition nach dem Einlegen, erfolgt somit eine automatische Zwangsverriegelung nach dem Einlegen der Batterie 11, wodurch die Batterie 11 besonders sicher verriegelt wird.

Die Figur 7 zeigt eine Schlossanordnung 1 gemäß einem dritten Ausführungsbeispiel der Erfindung. Das dritte Ausführungsbeispiel entspricht im Wesentlichen dem ersten Ausführungsbeispiel mit einer weiteren alternativen Gestaltung des Hebeelements 4. Ähnlich dem ersten Ausführungsbeispiel ist das Hebeelement 4 im dritten Ausführungsbeispiel als zweiseitiger Hebel und als separates Bauteil ausgebildet. Im Unterschied zum ersten Ausführungsbeispiel ist das Hebeelement 4 im dritten Ausführungsbeispiel jedoch um eine separat zur Riegelachse 20 vorgesehene Hebeachse 40 drehbar. Die Hebeachse 40 ist dabei auf einer der Batterie 11 abgewandten Seite des Schließriegels 2 angeordnet.

Ein erstes freies Ende 41 des Hebeelements 4 ist mittels des Schließriegels 2 betätigbar. Ein zweites freies Ende 42 kann bei einem Schwenken des Hebeelements 4 um die Hebeachse 40 die Kante 11b der Batterie 11 umgreifen und dadurch die Batterie 11 in Entnahmerichtung A anheben. Das heißt, im dritten Ausführungsbeispiel der Figur 7 ist das Hebeelement 4 indirekt über den Schließriegel 2 durch den Schließzylinder 3 betätigbar.

Weiterhin ist zwischen dem Schließriegel 2 und dem ersten freien Ende 41 des Hebeelements 4 ein Abstand 45 vorgesehen, wenn sich, wie in der Figur 7 dargestellt, der Schließriegel 2 in der Halteposition befindet, und das zweite freie Ende 42 des Hebeelements 4 an der Kante 11b der Batterie 11 anliegt. Dadurch kann der Schließriegel 2 um einen gewissen Winkel von etwa 5° in Richtung der Freigabeposition geschwenkt werden, bevor der Schließriegel 2 das Hebeelement 4 betätigt. Dadurch erfolgt ein Anheben der Batterie 11 nicht unmittelbar bei Beginn einer Drehung des Schließzylinders 3, sondern erst nach Drehen um einen gewissen Winkel. Dadurch kann insbesondere ein mögliches Verklemmen der Batterie 11 beim Entriegeln und Anheben und auch beim Einlegen vermieden werden. Alternativ ist es jedoch auch möglich, den Abstand 45 gleich Null zu gestalten, wodurch eine unmittelbare Betätigung des Hebeelements 4 bei Betätigung des Schließzylinders 3 erfolgt.

Zusätzlich umfasst die Schlossanordnung 1 des dritten Ausführungsbeispiels eine Entnahmefeder 12. Die Entnahmefeder 12 ist unterhalb der Batterie 11 angeordnet und übt bei eingelegter Batterie 11 eine Entnahme-Federkraft in Entnahmerichtung A auf die Batterie 11 aus. Die Entnahmefeder 12 unterstützt somit ein Anheben der Batterie 11 in die Entnahmerichtung A bei einer entsprechenden Betätigung des Schließzylinders 3, wodurch die Entnahme der Batterie 11 weiter erleichtert wird.

## Patentansprüche

1. Schlossanordnung, zur Sicherung einer Batterie (11) eines mit Muskelkraft und/oder Motorkraft betreibbaren Fahrzeugs, insbesondere eines Elektrofahrrads (10), umfassend:
- einen Schließriegel (2), welcher um eine Riegelachse (20) schwenkbar ist,
- einen Schließzylinder (3), welcher eingerichtet ist, den Schließriegel (2) zu betätigen, und
- ein Hebeelement (4), welches mit dem Schließzylinder (2) gekoppelt ist,
- wobei der Schließzylinder (2) in eine Halteposition und in eine Freigabeposition bewegbar ist, wobei der Schließzylinder (3) in der Halteposition eine Entnahme der Batterie (11) in einer Entnahmerichtung (A) verhindert, und in der Freigabeposition die Entnahme der Batterie (11) erlaubt, und
- wobei das Hebeelement (4) eingerichtet ist, beim Bewegen des Schließriegels (2) von der Halteposition in die Freigabeposition die Batterie (11) in Entnahmerichtung (A) zu bewegen, **dadurch gekennzeichnet, dass** das Hebeelement (4) direkt oder indirekt mittels des Schließzylinders (3) betätigbar ist.

2. Schlossanordnung nach Anspruch 1, wobei das Hebeelement (4) an dem Schließriegel (2) angeordnet ist.

3. Schlossanordnung nach Anspruch 1, wobei das Hebeelement (4) um eine Hebeachse (40), welche insbesondere parallel zur Riegelachse (20) ist, schwenkbar angeordnet ist.

4. Schlossanordnung nach Anspruch 3, wobei das Hebeelement (4) mittels Betätigung durch den Schließriegel (2) um die Hebeachse (40) schwenkbar ist.

5. Schlossanordnung nach einem der vorhergehenden Ansprüche, wobei der Schließriegel (2) ein Sicherungselement (21) aufweist, welches in der Halteposition des Schließriegels (2) formschlüssig in die Batterie (11) eingreift.

6. Schlossanordnung nach Anspruch 5, wobei das Sicherungselement (21) eine Einlegeschräge (22) aufweist, welche eingerichtet ist, bei einem Einlegen der Batterie (11), insbesondere entgegengesetzt zur Entnahmerichtung (A), den Schließriegel (2) in die Freigabeposition zu bewegen.

7. Schlossanordnung nach einem der vorhergehenden Ansprüche, ferner umfassend eine Rückstellfeder (23), welche eingerichtet ist, den Schließriegel (2) mittels einer Rückstell-Federkraft in die Halteposition zurückzustellen.

8. Schlossanordnung nach einem der vorhergehenden Ansprüche, wobei der Schließzylinder (3) einen, insbesondere zylindrischen, Schließkörper (31) aufweist, welcher um eine Schließachse (30) drehbar ist,

9. Schlossanordnung nach Anspruch 8, wobei der Schließzylinder (3) einen Schließpin (32) aufweist, welcher sich parallel zur Schließachse (30) erstreckt und welcher exzentrisch am Schließkörper (31) angeordnet ist, und wobei der Schließpin (31) eingerichtet ist, in den Schließriegel (2) einzugreifen.

10. Schlossanordnung nach Anspruch 9, wobei der Schließzylinder (3) in eine Verriegelungsposition und in eine Entnahmeposition drehbar ist, wobei in der Entnahmeposition der Schließpin (31) den Schließriegel (2) in der Freigabeposition hält, und wobei in der Verriegelungsposition der Schließpin (31) den Schließriegel (2) in der Halteposition hält.

11. Schlossanordnung nach Anspruch 10, wobei der Schließzylinder (3) in eine Einlegeposition drehbar ist, in welcher der Schließpin (31) ein Bewegen des Schließriegels (2) von der Halteposition in die Freigabeposition und umgekehrt erlaubt.

12. Schlossanordnung nach einem der Ansprüche 10 oder 11, ferner umfassend eine Verriegelungsfeder (33), welche eingerichtet ist, den Schließzylinder (3) mittels einer Verriegelungs-Federkraft in die Verriegelungsposition zurückzustellen.

13. Schlossanordnung nach Anspruch 12, wobei der Schließriegel (2) eine Rastvorrichtung (22) aufweist, welche ein Einrasten des Schließzylinders (3) in der Einlegeposition erlaubt, und wobei eine Rastkraft insbesondere entgegengesetzt zur Verriegelungs-Federkraft wirkt, und wobei die Rastkraft bevorzugt größer oder gleich der Verriegelungs-Federkraft ist.

14. Schlossanordnung nach einem der vorhergehenden Ansprüche, ferner umfassend eine Entnahmefeder (12), welche eingerichtet ist, eine Entnahme-Federkraft in Entnahmerichtung (A) auf die Batterie (11) aufzubringen.

15. Mit Muskelkraft und/oder Motorkraft betreibbares Fahrzeug, insbesondere Elektrofahrrad (10), umfassend eine Batterie (11) und eine Schlossanordnung (1) nach einem der vorhergehenden Ansprüche.

## Claims

1. Lock arrangement for securing a battery (11) of a vehicle which is operable by muscle power and/or motor power, in particular an electric bicycle (10), comprising:
- a locking catch (2) which is pivotable about a catch axis (20),
- a lock cylinder (3) which is configured to actuate the locking catch (2), and
- a lifting element (4) which is coupled to the lock cylinder (2),
- wherein the lock cylinder (2) is movable into a retaining position and into a release position, wherein the lock cylinder (3), in the retaining position, prevents removal of the battery (11) in a removal direction (A) and, in the release position, permits removal of the battery (11), and
- wherein the lifting element (4) is configured to move the battery (11) in the removal direction (A) when the locking catch (2) is moved from the retaining position into the release position, **characterized in that** the lifting element (4) is directly or indirectly actuatable by means of the lock cylinder (3).

2. Lock arrangement according to Claim 1, wherein the lifting element (4) is arranged on the locking catch (2).

3. Lock arrangement according to Claim 1, wherein the lifting element (4) is arranged so as to be pivotable about a lifting axis (40), which is in particular parallel to the catch axis (20).

4. Lock arrangement according to Claim 3, wherein the lifting element (4) is pivotable about the lifting axis (40) by means of actuation by the locking catch (2).

5. Lock arrangement according to one of the preceding claims, wherein the locking catch (2) has a securing element (21) which engages into the battery (11) in a form-fitting manner in the retaining position of the locking catch (2).

6. Lock arrangement according to Claim 5, wherein the securing element (21) has an insertion bevel (22) which is configured for movement of the locking catch (2) into the release position when the battery (11) is inserted, in particular counter to the removal direction (A).

7. Lock arrangement according to one of the preceding claims, further comprising a restoring spring (23) which is configured to return the locking catch (2) into the retaining position by means of a restoring-spring force.

8. Lock arrangement according to one of the preceding claims, wherein the lock cylinder (3) has an in particular cylindrical lock body (31) which is rotatable about a lock axis (30).

9. Lock arrangement according to Claim 8, wherein the lock cylinder (3) has a lock pin (32) which extends parallel to the lock axis (30) and which is arranged eccentrically on the lock body (31), and wherein the lock pin (31) is configured to engage into the locking catch (2).

10. Lock arrangement according to Claim 9, wherein the lock cylinder (3) is rotatable into a locking position and into a removal position, wherein, in the removal position, the lock pin (31) retains the locking catch (2) in the release position, and wherein, in the locking position, the lock pin (31) retains the locking catch (2) in the retaining position.

11. Lock arrangement according to Claim 10, wherein the lock cylinder (3) is rotatable into an insertion position, in which the lock pin (31) permits movement of the locking catch (2) from the retaining position into the release position and vice versa.

12. Lock arrangement according to either of Claims 10 and 11, further comprising a locking spring (33) which is configured to return the lock cylinder (3) into the locking position by means of a locking spring force.

13. Lock arrangement according to Claim 12, wherein the locking catch (2) has a latching device (22) which permits latching of the lock cylinder (3) in the insertion position, and wherein a latching force acts in particular counter to the locking spring force, and wherein the latching force is preferably greater than or equal to the locking spring force.

14. Lock arrangement according to one of the preceding claims, further comprising a removal spring (12) which is configured to apply a removal spring force to the battery (11) in the removal direction (A).

15. Vehicle operable by muscle power and/or motor power, in particular an electric bicycle (10), comprising a battery (11) and a lock arrangement (1) according to one of the preceding claims.

## Revendications

1. Système de serrure permettant de sécuriser une batterie (11) d'un véhicule, notamment d'une bicyclette électrique (10), pouvant être propulsé par force musculaire et/ou par une force de moteur, comprenant :
- un verrou de fermeture (2) pouvant pivoter autour d'un axe de verrou (20),
- un cylindre de fermeture (3) conçu pour actionner le verrou de fermeture (2), et
- un élément de levage (4) accouplé au cylindre de fermeture (2),
- le cylindre de fermeture (2) pouvant être déplacé vers une position de retenue et vers une position de libération, le cylindre de fermeture (3) empêchant, dans la position de retenue, le retrait de la batterie (11) dans une direction de retrait (A) et permettant, dans la position de libération, le retrait de la batterie (11), et
- l'élément de levage (4) étant conçu pour déplacer la batterie (11) dans la direction de retrait (A) lors du déplacement du verrou de fermeture (2) de la position de retenue à la position de libération, **caractérisé en ce que** l'élément de levage (4) peut être actionné directement ou indirectement au moyen du cylindre de fermeture (3).

2. Système de serrure selon la revendication 1, dans lequel l'élément de levage (4) est disposé sur le verrou de fermeture (2).

3. Système de serrure selon la revendication 1, dans lequel l'élément de levage (4) est disposé de manière à pouvoir pivoter autour d'un axe de levage (40) qui est notamment parallèle à l'axe de verrou (20).

4. Système de serrure selon la revendication 3, dans lequel l'élément de levage (4) peut pivoter autour de l'axe de levage (40) par actionnement du verrou de fermeture (2).

5. Système de serrure selon l'une des revendications précédentes, dans lequel le verrou de fermeture (2) comporte un élément de sécurité (21) qui s'engage par complémentarité de forme dans la batterie (11) lorsque le verrou de fermeture (2) est dans la position de retenue.

6. Système de serrure selon la revendication 5, dans lequel l'élément de sécurité (21) comporte une rampe d'insertion (22) qui est conçue pour déplacer le verrou de fermeture (2) dans la position de libération lors d'une insertion de la batterie (11), notamment dans la direction opposée à la direction de retrait (A).

7. Système de serrure selon l'une des revendications précédentes, comprenant en outre un ressort de rappel (23) qui est conçu pour ramener le verrou de fermeture (2) dans la position de retenue au moyen d'une force de rappel de repositionnement.

8. Système de serrure selon l'une des revendications précédentes, dans lequel le cylindre de fermeture (3) comporte un corps de fermeture (31), notamment cylindrique, qui peut tourner autour d'un axe de fermeture (30),

9. Système de serrure selon la revendication 8, dans lequel le cylindre de fermeture (3) comporte une broche de fermeture (32) qui s'étend parallèlement à l'axe de fermeture (30) et qui est disposée de manière excentrée sur le corps de fermeture (31), et dans lequel la broche de fermeture (31) est conçue pour s'engager dans le verrou de fermeture (2).

10. Système de serrure selon la revendication 9, dans lequel le cylindre de fermeture (3) peut tourner vers une position de verrouillage et vers une position de retrait, dans lequel, dans la position de retrait, la broche de fermeture (31) retient le verrou de fermeture (2) dans la position de libération, et dans lequel, dans la position de verrouillage, la broche de fermeture (31) retient le verrou de fermeture (2) dans la position de retenue.

11. Système de serrure selon la revendication 10, dans lequel le cylindre de fermeture (3) peut tourner vers une position d'insertion dans laquelle la broche de fermeture (31) permet de déplacer le verrou de fermeture (2) de la position de retenue à la position de libération et inversement.

12. Système de serrure selon l'une des revendications 10 ou 11, comprenant en outre un ressort de verrouillage (33) qui est conçu pour ramener le cylindre de fermeture (3) dans la position de verrouillage au moyen d'une force de rappel de verrouillage.

13. Système de serrure selon la revendication 12, dans lequel le verrou de fermeture (2) comporte un dispositif d'encliquetage (22) qui permet au cylindre de fermeture (3) de s'enclencher dans la position d'insertion, et dans lequel une force d'encliquetage agit notamment à l'opposé de la force de rappel de verrouillage, et dans lequel la force d'encliquetage est de préférence supérieure ou égale à la force de rappel de verrouillage.

14. Système de serrure selon l'une des revendications précédentes, comprenant en outre un ressort de retrait (12) qui est conçu pour appliquer sur la batterie (11) une force de rappel de retrait dans la direction de retrait (A).

15. Véhicule pouvant être propulsé par force musculaire et/ou par la force d'un moteur, notamment bicyclette électrique (10), comprenant une batterie (11) et un système de serrure (1) selon l'une des revendications précédentes.
